# EUROPEAN PATENT SPECIFICATION

(11) **EP 2 728 142 B1**
(45) Date of publication and mention of the grant of the patent: **29.06.2016**
(21) Application number: 14153500.5
(22) Date of filing: 07.05.2010
(51) Int. Cl.: F02C 6/12, G01M 13/04

(54) **Turbocharger bearing health monitor**
Turbolader mit Lagerzustandsüberwachung
Procédé et dispositif de surveillance de l'état des paliers pour turbocompresseurs

(30) Priority: 18.05.2009 US 467516
(43) Date of publication of application: 07.05.2014
(62) Divisional of application: 10162365.0
(73) Proprietor: Honeywell International Inc., Morris Plains, NJ 07950 (US)
(72) Inventor: Hosny, Diaa, Morristown, NJ 07962 (US); Ahmad, Samir, Morristown, NJ 07962 (US)
(74) Representative: Houghton, Mark Phillip

(56) References cited:
- EP-A1- 1 867 850
- GB-A- 2 173 865
- US-A1- 2007 079 613

## Description

This invention relates generally to the field of turbochargers. More particularly, the present invention provides apparatus and methods for monitoring the health of turbocharger bearings as they wear with age and use.

### BACKGROUND OF THE INVENTION

Turbochargers are constructed to be robust so that they can run without fault for a long time. Nevertheless, turbocharger bearings can be subject to wear and damage due to high loading, lubrication failures, contamination, over speeding, misalignment, and the like. An early detection of a bearing failure allows corrective measures to be implemented to avoid catastrophic failure, thus providing significant cost savings and improving turbocharger reliability. Thus, it is often desirable to monitor the status of the bearings so that the turbocharger can be derated, stopped and/or repaired prior to a catastrophic failure, i.e., a total bearing failure.

Prior bearing condition detection was typically based on the maximum excursion distance of the rotor from its centerline (i.e., undeflected) position. For example, a blade sensor configured to sense the distance of a compressor blade from the shroud wall might have been used to detect bearing condition. While this technique does provide some information about bearing, that information is clouded by other factors that affect the excursion distance, such as the operating condition of the turbocharger (and engine), and such as the overall vibration environment in which the turbocharger is operating. For example, an automotive turbocharger could have a relatively large excursion due to the engine developing a momentary vibration at a natural frequency of the turbocharger rotor.

EP 186 7850 discloses a system and method for turbocharger early failure detection and avoidance. US 2007/0079613 discloses a turbocharger bearing health monitor.

Accordingly, there has existed a need for an apparatus and related methods for monitoring the health of turbocharger bearings as they wear with age and use over the life of a turbocharger. Preferred embodiments of the present invention satisfy these and other needs, and provide further related advantages.

### SUMMARY OF THE INVENTION

The present invention in its various aspects is as set out in the appended claims. In various embodiments, the present invention solves some or all of the needs mentioned above, typically providing an efficient and reliable turbocharged engine and/or turbocharger system.

The invention also provides a method for timing a failure-condition action for a bearing of the turbocharger. The method includes the step of receiving a stream of information from the sensor over a sensing period (i.e., a period of time over which the turbocharger is operating and the sensor is sensing off-axis rotor motion). The information is indicative
of off-axis rotor motion during a plurality of different operating conditions that occur during the sensing period. The stream of information is reduced to a set of calculated response data representing, for a plurality of amplitude levels, the frequencies with which the off-axis rotor motion reaches those amplitude levels.

This calculated response data is compared to a set of predetermined, failure-condition response data that represents the frequency with which the amplitude levels that would be anticipated if a failure condition occurred. When graphed (e.g., with the amplitude as an abscissa and frequency of occurrence as an ordinate), the calculated response data and failure-condition response data might graphically overlap. This frequency-at-amplitude overlap area between the calculated response data and the failure-condition response data is calculated. If the calculated overlap surpasses a threshold level from among a set of one or more threshold levels, a respective failure condition of one or more failure conditions is indicated, and a respective failure-condition action is initiated. However, if the calculated overlap fails to surpass a final threshold level from among the set of one or more threshold levels (e.g., a threshold level at which the turbocharger is put-into limp-home mode), the steps of the process are repeated.

Advantageously, this process allows for numerous operating conditions to be considered while monitoring the bearing condition, providing more robust results. The effects of spurious input during one operating condition can thus be diluted, and failure modes that don't show up in certain operating conditions are more likely to be detected. Thus, the life of the bearings is more accurately monitored, and the turbocharger can reliably be operated in a condition closer to catastrophic failure than might typically be done.

Other features and advantages of the invention will become apparent from the following detailed description of the preferred embodiments, taken with the accompanying drawings, which illustrate, by way of example, the principles of the invention. The detailed description of particular preferred embodiments, as set out below to enable one to build and use an embodiment of the invention, are not intended to limit the enumerated claims, but rather, they are intended to serve as particular examples of the claimed invention.

### BRIEF DESCRIPTION OF THE DRAWINGS

FIG. 1 is a system layout of an internal combustion engine with a turbocharger and a charge air cooler embodying the present invention.
FIG 2 is a cross-section of a rotor bearing housing showing bearing sensors, the rotor bearing housing and sensors being part of the turbocharger that is depicted in FIG. 1.
FIG 3 is a process diagram of a first aspect of a method embodying the invention.
FIG 4 is a process diagram of a background approach not forming part of the claimed invention.
FIG 5 is a process diagram of a background approach not forming part of the claimed invention.
FIG 6 is a fist portion of a process diagram of the invention.
FIG 7 is a second portion of the process diagram depicted in FIG. 6.
FIG 8 is a third portion of the process diagram depicted in FIG. 6.
FIG. 9 is a graph depicting the overlap between calculated frequency-at-amplitude data and previously established frequency-at-amplitude data for a hypothetical embodiment.

### DETAILED DESCRIPTION OF THE PREFERRED EMBODIMENTS

The invention summarized above and defined by the enumerated claims may be better understood by referring to the following detailed description, which should be read with the accompanying drawings. This detailed description of particular preferred embodiments of the invention, set out below to enable one to build and use particular implementations of the invention, is not intended to limit the enumerated claims, but rather, it is intended to provide particular examples of them.

Typical embodiments of the present invention reside in a bearing health monitor variable for a turbocharger, along with associated methods and apparatus (e.g., software on computer-readable media, programmed ECUs, turbochargers, and turbocharged internal combustion engines). These embodiments provide for improved monitoring of the wear of turbocharger bearings, and thereby provide for a reliable turbocharger that can be maintained in a more cost effective manner than might otherwise occur.

Below, the hardware of an embodiment will be described, which will be followed by a brief summary of the method of the embodiment, followed by a more detailed discussion of three separate aspects of the method, and then by a detailed discussion about the complete embodiment.

### HARDWARE OF THE EMBODIMENTS

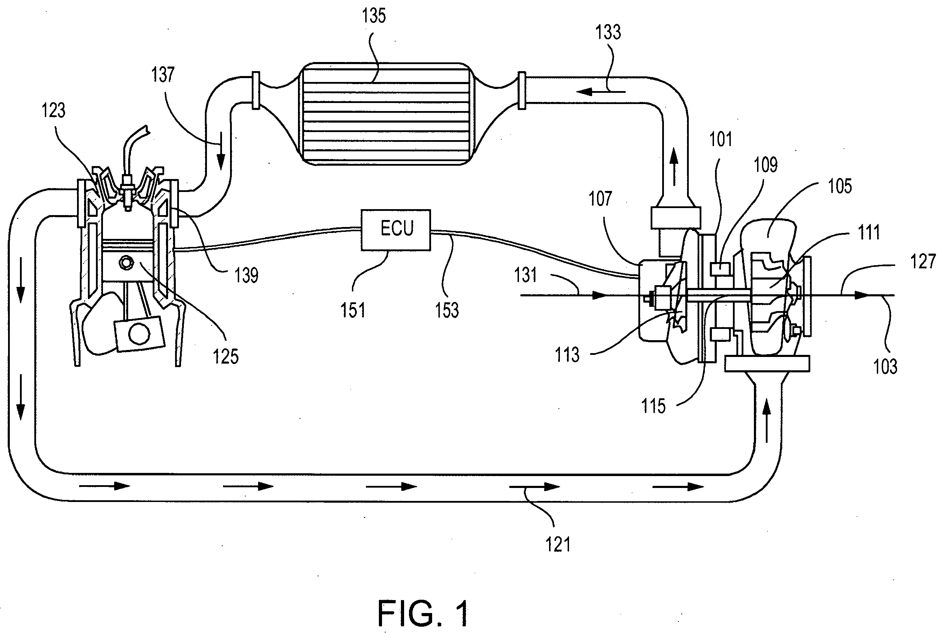

With reference to FIG. 1, in an embodiment of the invention a turbocharger 101 includes a turbocharger housing and a rotor configured to rotate within the turbocharger housing along an axis of rotor rotation 103 on thrust bearings and two sets of journal bearings (one for each respective rotor wheel), or alternatively, other similarly supportive bearings. The turbocharger housing includes a turbine housing 105, a compressor housing 107, and a bearing housing 109 (i.e., a center housing that contains the bearings) that connects the turbine housing to the compressor housing. The rotor includes a turbine wheel 111 located substantially within the turbine housing, a compressor wheel 113 located substantially within the compressor housing, and a shaft 115 extending along the axis of rotor rotation, through the bearing housing, to connect the turbine wheel to the compressor wheel.

The turbine housing 105 and turbine wheel 111 form a turbine configured to circumferentially receive a high-pressure and high-temperature exhaust gas stream 121 from an engine, e.g., from an exhaust manifold 123 of an internal combustion engine 125. The turbine wheel (and thus the rotor) is driven in rotation around the axis of rotor rotation 103 by the high-pressure and high-temperature exhaust gas stream, which becomes a lower-pressure and lower-temperature exhaust gas stream 127 and is axially released into an exhaust system (not shown).

The compressor housing 107 and compressor wheel 113 form a compressor stage. The compressor wheel, being driven in rotation by the exhaust-gas driven turbine wheel 111, is configured to compress axially received input air (e.g., ambient air 131, or already-pressurized air from a previous-stage in a multi-stage compressor) into a pressurized air stream 133 that is ejected circumferentially from the compressor. Due to the compression process, the pressurized air stream is characterized by an increased temperature, over that of the input air.

Optionally, the pressurized air stream may be channeled through a convectively cooled charge air cooler 135 configured to dissipate heat from the pressurized air stream, increasing its density. The resulting cooled and pressurized output air stream 137 is channeled into an intake manifold 139 on the internal combustion engine, or alternatively, into a subsequent-stage, in-series compressor. The operation of the system is controlled by an ECU 151 (engine control unit) that connects to the remainder of the system via communication connections 153.

The ECU 151 includes a processing device and data storage media. It is configured (e.g., programmed) with software configured to carry out methods of adaptively monitoring the health of the turbocharger bearings, and thus serves as a turbocharger inspection control unit. The data storage media is computer-readable media having computer-executable instructions that form the software. In alternative embodiments, this software can be run in processing devices other than the ECU, such as a separate turbocharger inspection control unit, and/or some or all of the processing functions can be done in equivalent hardware systems (e.g., an FFT chip), rather than by the processing device as programmed with the software.

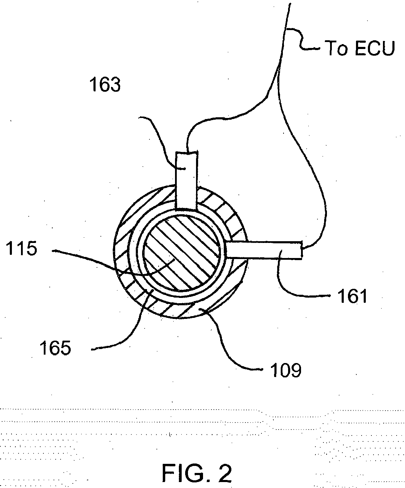

With reference to FIG. 2, on each side of the rotor (i.e., on the compressor-wheel side and on the turbine-wheel side), a pair of sensors 161 and 163, are positioned to detect off-axis rotor motion (e.g., off-axis acceleration or off-axis position of that side of the rotor) in two degrees of freedom. Each pair of sensors (the turbine-side pair and the compressor-side pair) are typically positioned for sensing at a 90 degree angle from one another (e.g., an x-axis sensor and a y-axis sensor, wherein a z-axis is the normal rotor axis of rotation) on their respective side of the bearing housing 109 so as to detect motion of the rotor shaft 115 near a journal bearing 165. Alternatively, sensors could be positioned to detect the off-axis rotor motion of the respective wheel.

The two sensors measure information on the rotor acceleration in two directions, each of which is normal to both the axis of rotation and each other. From a series of off-axis measurements taken over a given time period, the sensors produce a stream of information providing an acceleration signature that is indicative of off-axis rotor motion over the given time period. If off-axis positions are measured, off-axis accelerations can be calculated from the series of off-axis positions, providing the acceleration signature.

Additional sensors are appropriately provided and positioned to detect information regarding a rotational speed of the turbocharger rotor (i.e., a "rotor speed" sensor), an oil inlet temperature, and an oil inlet pressure. As an alternative to a rotor speed sensor, sensors may be provided and positioned to detect engine speed, the turbocharger's exhaust inlet temperature, the turbocharger's exhaust inlet pressure, and either the instantaneous fuel rate or rack position. In short, these sensors sense data for determining the operating condition of the system.

### THE METHOD OF THE EMBODIMENT

For a given turbocharger design, the switch from hydrodynamic lubrication (wherein the mating surfaces of the bearings are completely separated by a cohesive film of lubricant that carries the load of the bearing) to boundary lubrication (in which the load is carried by surface asperities rather than by the lubricant), is characterized by a high frequency signal in a given frequency range. This characteristic frequency range can be determined experimentally, and a high response in this range is indicative of approaching catastrophic bearing failure.

It is anticipated that in some situations (such as a partial failure of bearings on only one side of the rotor), such a response might be more detectible on one side of the rotor or the other. Thus, the methods of the embodiment are separately conducted using sensor data from the compressor side of the rotor, and using sensor data from the turbine side of the rotor. In alternative embodiments, the sensing of the response from only one side, the analysis of a composite of the responses from the two sides, or even the analysis of only one degree of freedom, would be within the anticipated scope of the invention.

Under the present embodiment, the ECU is programmed for timing a bearing failure-condition action for the turbocharger, using information from one or more of the sensors sensing off-axis rotor motion. Under the method, the ECU receives a stream of information from the sensor(s), the information being indicative of off-axis rotor motion over a given sensing period of time. The ECU gathers a sampling of this data over a sensing period of time, and decomposes this stream of information into a set of components representing amplitudes of motion at different frequencies of off-axis rotor motion. More particularly, the ECU conducts a Fast Fourier Transform (an "FFT") to reduce the stream of data into a set of related frequency domain data (components), i.e., amplitudes and phases, wherein each calculated amplitude and its respective phase represent a portion of the motion occurring at a given frequency.

A subset of this frequency domain data, representing the characteristic frequency range of boundary lubrication (as can be experimentally determined), is analyzed against data representing one or more failure conditions including an experimentally identified final-failure condition (e.g., one occurring a little prior to catastrophic failure) for this type of turbocharger. The analysis is conducted to get one or more indicia of failure. More particularly, the analysis compares the similarity between the subset of frequency domain data and a set of experimentally derived data representing frequency-domain data in the characteristic frequency range for the one or more failure conditions, including a condition chosen as a final-failure condition.

In the comparison, the indicia are reviewed for a first passage past one or more thresholds, being the one or more failure condition levels. The first passage of the indicia, for this subset of the frequency domain data, past a first of these thresholds signals that the bearing condition is approaching a final failure condition, and appropriate warning action needs to be taken by the ECU. This failure condition, being an approaching-final-failure failure condition, has appropriate actions such as lighting warning lights and/or derating the turbocharger to reduce the risk of catastrophic failure. The first passage of the indicia, for this subset of the frequency domain data, past a final of these thresholds signals that the bearing condition has reached the final failure condition, and appropriate actions may include shutting down the engine, warning the operator, and/or putting the engine in limp-home mode.

This analysis is repeated on a periodic basis so long as the first passage of the subset of components (the indicia) past the final threshold of the one or more thresholds, requiring a complete shutdown of the engine, fails to occur. More particularly, if the present indicia of off-axis rotor motion do not indicate a final failure condition has occurred (i.e., that the final threshold condition was not exceeded), an interval until a next present indicia of off-axis rotor motion will be established, is selected. The steps of this method are then repeated after the newly selected interval has passed. The interval until the next present indicia of off-axis rotor motion is established can vary, and is typically based upon the present indicia of off-axis rotor motion, as well as historic data containing indicia of off-axis rotor motion calculated after prior intervals (i.e., at earlier times in the turbocharger's history).

It should be noted that to have significant historic data, at least one or two rounds of data gathering indicia of off-axis rotor motion must be conducted to establish a baseline. These rounds are typically done early in the lifespan of the turbocharger, when it can be presumed that the turbocharger bearings are in good operating condition.

### METHOD OF THE EMBODIMENT

With reference to FIGS. 1, 2 and 3, under a first method of the embodiment, inspections under the method of the invention are not conducted continuously. Rather, they are conducted under an inspection schedule that adapts to the condition of the bearings. Under the inspection schedule, a first inspection is done promptly when the turbocharger is relatively new, and each additional inspection is set at an interval after the previous one.

After each inspection interval, an inspection process is conducted. The interval can be based on mileage (for a vehicle), the date, an estimate of turbocharger usage, an estimate of related engine usage, or other metrics. In the first step of the inspection process, present indicia of off-axis rotor motion are calculated using signals from the various sensors. More particularly, data identifying an acceleration signature of bearing is gathered 201. The data may be gathered throughout a range of operating conditions, and thus represent a distribution of responses in various operating conditions, or it may represent limited response in only a few (or even one) operating conditions.

The data is analyzed 203 to establish the indicia of off axis rotor motion, which are indicative of the condition of the bearings. These indicia may be in a variety of formats, and could be as simple as a single numerical rating (i.e., the indicia could be a single indicium). It should be noted that throughout this patent specification, the described steps are actions rather than being a means for reaching a result, unless it is explicitly stated otherwise.

If the bearing condition warrants some type of actions (e.g., the bearing condition crosses some threshold into a defined failure-condition state), such actions are taken 205. For example, for failure conditions that signify that the bearings are approaching a more critical condition, a signal light could be lit to alert an operator, or the engine operating conditions could be de-rated (e.g., the ECU could limit the operation of the engine and/or the turbocharger during further use). For failure conditions that signify a more critical condition has occurred (e.g., that the bearings are already in or are virtually in a condition in which catastrophic failure could occur), the vehicle could be put into a limp-home mode offering only limited operation, or the engine could be immediately stopped to prevent significant damage (e.g., in the case of exceeding a final, critical threshold).

If the present indicia of off-axis rotor motion do not indicate a final failure condition has been reached, an interval until a next present indicia of off-axis rotor motion will be established (i.e., until the next inspection process is to occur) is selected 207. As previously noted, the interval can be based on mileage (for a vehicle), the date, an estimate of turbocharger usage, an estimate of related engine usage, or other metrics. This process is adaptive in that the interval until a next inspection (i.e., until a next present indicia of off-axis rotor motion will be established) can vary based upon the present indicia of off-axis rotor motion, and/or on previous indicia of off-axis rotor motion. Thus, as the conditions of the bearings degrade, the interval may be decreased, increasing the inspection frequency, and decreasing the chance that the bearings will slip into a final failure-condition state undetected, and then catastrophically fail.

These steps are then repeated after the newly selected interval has passed. Because the intervals will typically decrease in length as the bearings degrade, the turbocharger is more reliable, and the critical threshold at which actions will be taken can be set at a lower (i.e., more worn) bearing condition, providing for more turbocharger use before replacement. At the same time, the intermittent nature of the inspection allows for inspections to be far more robust than inspections presently known to those skilled in the art, which do not typically take full account of the full range of operating conditions and spurious noise. Additionally, in an inspection of the engine, a mechanic might be allowed to review the length of the present interval to judge the present health of the bearings.

It should be noted that the designation of steps by terms like "first," "second," and "third," (or (a), (b) and (c) in the claims) is not intended to limit the order of the steps, and is not intended to limit whether they can be conducted concurrently, other than where such a limitation is required by the functionality of the steps. Thus, it should not be assumed that the order of steps cannot change, or that steps cannot occur concurrently. For example, the ECU might be configured to conduct steps 205 and 207 concurrently, or to conduct step 207 before step 205. Likewise, for some analysis types, it may be possible for some of the step 203 analysis to occur concurrently with the step 201 data gathering, and for some Bearing Condition information to be available for step 205 Actions prior to the completion of steps 201 and 203.

### METHOD OF THE FIRST BACKGROUND APPROACH

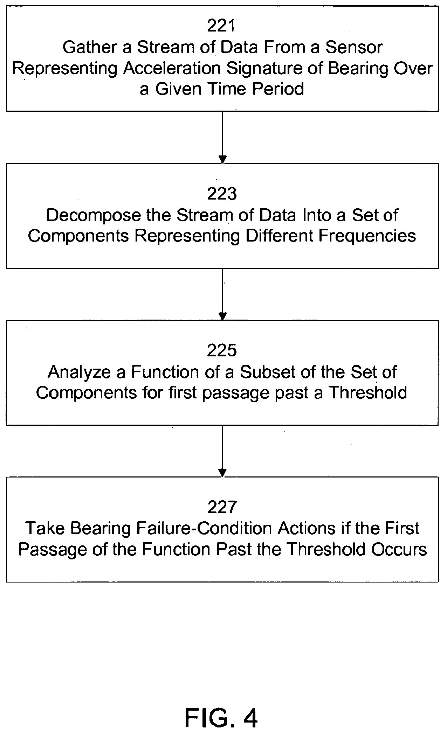

With reference to FIGS. 1, 2 and 4, under a second method of the first background approach, an analysis establishes indicia of off axis rotor motion that are indicative of the condition of the bearings. The indicia are based not simply on the displacement of the rotor, but rather on the levels of rotor vibration over a limited range of frequencies. The indicia are used to time various failure-condition actions.

More particularly, a stream of information is received and gathered 221 from one or more sensors of a turbocharger. The sensors sense information on off-axis rotor motion, such as the acceleration of the bearing housing directly adjoining the location of a bearing. The stream of information is thus indicative of off-axis rotor motion over a given time period that the stream is received.

The stream of information is decomposed 223 into a set of components representing different frequencies, such as by processing the stream of data using a Fast Fourier Transform ("FFT") algorithm to get a series of coefficients and phases, the coefficients representing response levels at different respective frequencies. A subset of the set of components represents the response levels at respective critical frequencies (e.g., over a critical range of frequencies) experimentally established as having increasing response as a turbocharger bearing switches to boundary lubrication and approaches catastrophic failure, and thus is known to be indicative of such failure.

The response over the range of these critical frequencies (i.e., the subset of the set of components) is represented as a function (e.g., a bell curve), and the function is analyzed 225 for a first passage past a bearing failure-condition threshold. If the first passage of the function past the threshold occurs, a failure-condition action is then conducted 227. In other words, a function is developed representing the response over the critical frequency range, and that function is analyzed for exceeding one or more thresholds.

If a final failure condition is not indicated such that no further testing is needed, these steps are then repeated after another interval has passed (optionally varying as discussed above for the first method of the embodiment). Because this analysis is based on a significant amount of data that is processed for frequency-based content, and because only the range of frequencies of interest are analyzed for a failure condition, the analysis can effectively mitigate a significant amount of spurious data that could otherwise prematurely signal a failure condition (such as might occur in a system that indicates failure based on the first passage of a rotor displacement reading past a predetermined maximum allowable rotor displacement). Additionally, in an inspection of the engine, a mechanic might be able to review the response in the critical frequency levels to analyze the health of the bearings and judge whether boundary lubrication is occurring.

### METHOD OF THE INVENTION

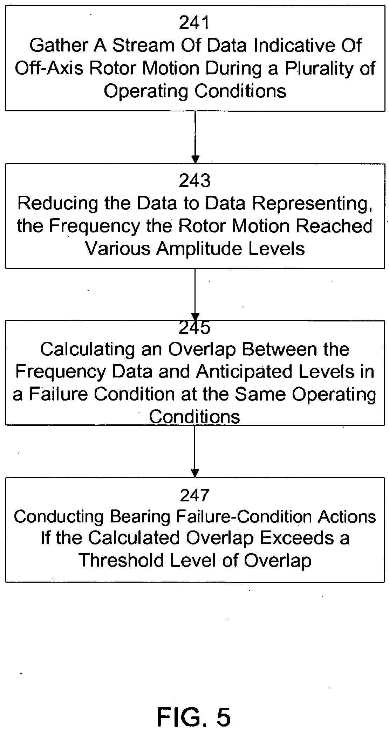

With reference to FIGS. 1, 2 and 5, under the present invention, an analysis establishes indicia of off axis rotor motion that are indicative of the condition of the bearings. The indicia are based not simply on the displacement of the rotor, but rather on the frequency with which the rotor excursion surpasses various levels over a range of operating conditions. The indicia are used to time various failure-condition actions.

More particularly, a stream of information indicative of off-axis rotor motion is gathered 241. The stream of information includes data taken over a plurality of identified operating conditions. This stream of information is reduced 241 to frequency-at-amplitude data required by the present invention (i.e., the stream of information is used to calculate the frequency-at-amplitude data). For the purposes of this application, frequency-at-amplitude data should be understood to represent data providing, for each of a plurality of amplitude levels, the frequency, over
the range of operating conditions, with which the off-axis rotor motion was at a maximum at that amplitude level.

This calculated frequency-at-amplitude data is compared to frequency-at-amplitude data that has been previously established as representing what the calculated data would typically look like during a given failure condition of a bearing. This failure-condition frequency-at-amplitude data could be obtained experimentally, or by analysis.

A degree of overlap, between the calculated frequency-at-amplitude data and previously established frequency-at-amplitude data representing the same plurality of operating conditions during a failure condition, is calculated 245. Optionally, this calculation may be made by approximating the calculated frequency-at-amplitude data by a first function, approximating the previously established frequency-at-amplitude data by a second function, and then calculating the overlap of the two functions.

A failure-condition action is initiated 247 if the calculated overlap surpasses a threshold level. The threshold level may be one from a plurality of threshold levels. For example, a first threshold level might be used to establish that the bearings are approaching the failure condition, while a second (higher) threshold level might be used to establish that the bearings are likely to be in the failure condition.

If a final failure condition is not indicated such that no further testing is needed, these steps are then repeated after another interval has passed (optionally varying as discussed above for the first method of the first embodiment). Because this analysis is based on data from an identified range of operating conditions, it is sensitive to various types of bearing failures, and it mitigate a significant amount of spurious data that could otherwise prematurely signal a failure condition. Additionally, the overlap percentages can provide a mechanic with a simple measure to analyze the health of the bearings and judge whether boundary lubrication is occurring.

### COMPOSITE METHOD OF THE FIRST BACKGROUND APPROACH.

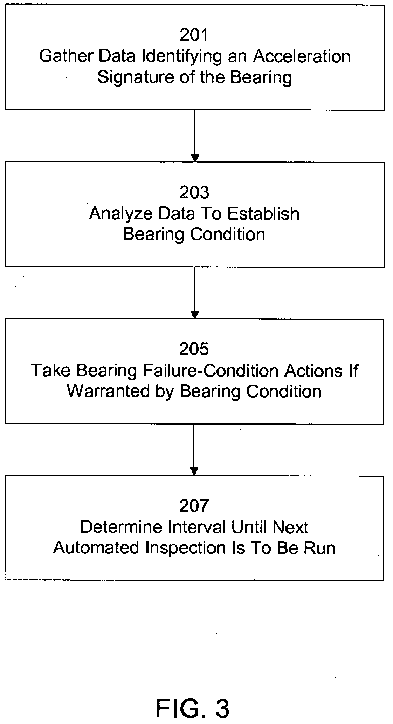

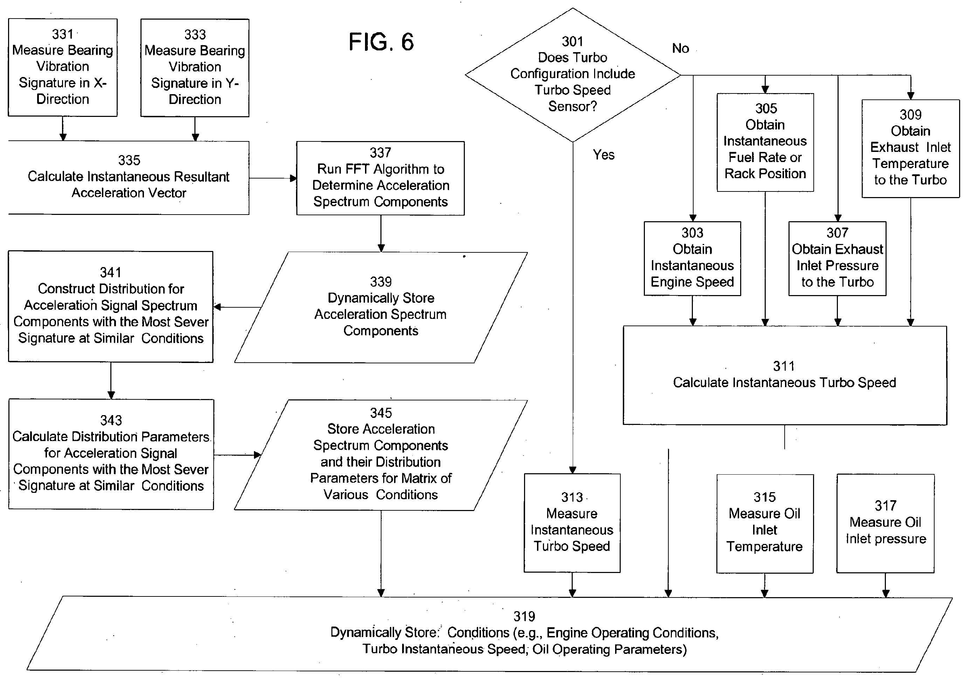

With reference to FIGS. 3, 4, 5 and 6, the first background approach incorporates the first, second and third methods of the first background approach. Described is the method, as used on the compressor side. The same method is typically run for the turbine side, optionally at the same time and sharing engine operating condition data.

Under this embodiment, when the time for an inspection comes due, the steps 201, 221 and 241 of gathering data include a repeated process of sampling bearing data on off-axis rotor motion over a plurality of different time periods, each of the plurality of time periods being characterized by an operating condition, thus providing data for a variety of operating conditions over a sensing period of time. It should be understood that the sensing period represents a period of time long enough to sample the plurality of operating conditions. Each operating condition is defined by the turbocharger rotor rotational speed (i.e., "rotor speed"), an oil inlet temperature and an oil inlet pressure. These parameters can be measured, or can be calculated based on other parameters, e.g., depending on whether the turbocharger configuration has a rotor speed sensor 301.

If the turbocharger configuration does not have a rotor speed sensor, then sensors are used to obtain the instantaneous engine speed 303, the instantaneous exhaust inlet pressure to the turbine 307, the instantaneous exhaust inlet temperature to the turbine 309 and either the instantaneous fuel rate or rack position 305. The rotor speed is then calculated 311 using these parameters, as is known in the art, and stored 319 along with a sensed (measured) instantaneous oil inlet temperature 315, instantaneous oil inlet pressure 317, and a time stamp for that operating condition. If, however, the turbo configuration includes a rotor speed sensor, then the rotor speed is sensed (measured) 313, and stored 319 along with the sensed instantaneous oil inlet temperature 315, instantaneous oil inlet pressure 317, and operating-condition time stamp.

Concurrently, immediately prior or immediately after the storing of the engine condition, data is gathered representing the acceleration signature of the bearing for the particular engine operating condition presently being measured in steps 301-317. More particularly, the compressor-side, x-axis accelerometer 161 and the compressor-side, y-axis accelerometer 163 repeatedly sense x- and y-axis accelerations 331 and 333 (respectively) over a sensing time-period (e.g., 3 seconds) with a frequency adequate to calculate a suitable frequency domain analysis over the frequencies of interest, as is described below. The necessary time-period and measurement frequency can be analytically estimated or experimentally determined by a person of skill in the art.

As the acceleration data is being sensed, the ECU calculates 335 an instantaneous resultant acceleration vector from the x-axis and y-axis acceleration measurements, and feeds the resultant information into a running real-time FFT calculation routine 337 to determine the acceleration spectrum components (i.e., the amplitudes and phases of the vibration components at different frequencies), as represented by the coefficients determined by the FFT analysis, for the respective instantaneous engine condition sensed in steps 301-317. Thus, the stream of data is decomposed 223 into a set of components representing the acceleration component amplitudes at different frequencies for the operating condition being sensed.

Upon completion of the FFT analysis for the sensed operating condition, the acceleration spectrum components for that operating condition are stored 339 along with a time stamp indicating the operating condition under which the acceleration spectrum components were developed. Then, the processes of sensing and storing the engine condition 301-317, and sensing, analyzing and storing acceleration spectrum components 331-339 for that engine condition are repeated numerous times at different operating conditions to develop a database of acceleration spectrum components at a wide variety of operating conditions covering the plurality of operating conditions.

With the database of acceleration spectrum components at a variety of operating conditions completed, a distribution is constructed 341 representing only the most sever accelerations at similar operating conditions. In other words, for a given set of similar operating conditions, the highest responses (coefficients) at each frequency are used to construct a distribution function representing maximum bearing accelerations at each frequency. This distribution function, which serves as indicia of off-axis rotor motion levels, is then analyzed to calculate distribution parameters 343 that approximate the function for each group of similar operating conditions.

Each such set of similar operating conditions is one of a limited number of similar-condition sets, and the distribution parameters are calculated for each such similar-condition set. Thus, for every similar-condition set, a function has been created as the worse case response, and a simplified set of distribution parameters, e.g., mean value and a standard deviation (for a normal distribution), or a shape parameter and a scaling parameter.

Finally, the acceleration spectrum components and their associated distribution parameters are stored 345 for a matrix of the various conditions represented by the similar-condition sets, thus forming a database entry of off-axis rotor motion levels 245 at that inspection time. The (full set of) spectrum components and their distribution parameters are thus identifiable as representing the acceleration signature of the bearing throughout a range of identifiable operating conditions at that inspection time. Thus, a database is developed representing, for each set of a plurality of similar operating conditions, the historic response of the bearings in off-axis rotor motion through a wide range of frequencies.

The time stamps discussed above can be in a variety of formats, not all of which require an actual time to be recorded. For example, the inspection times could be numbered, with each inspection being associated with an entry indicating the time, mileage, or other interval since the last inspection. Likewise, the operating condition could be numbered, with each operating condition being associated with an entry indicating the inspection time with which it is associated.

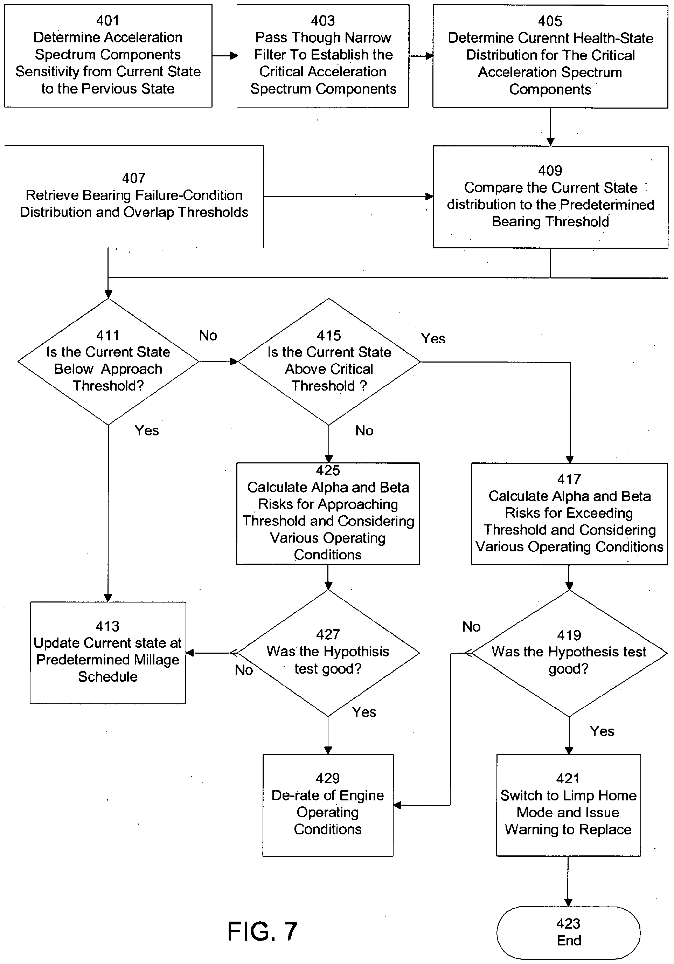

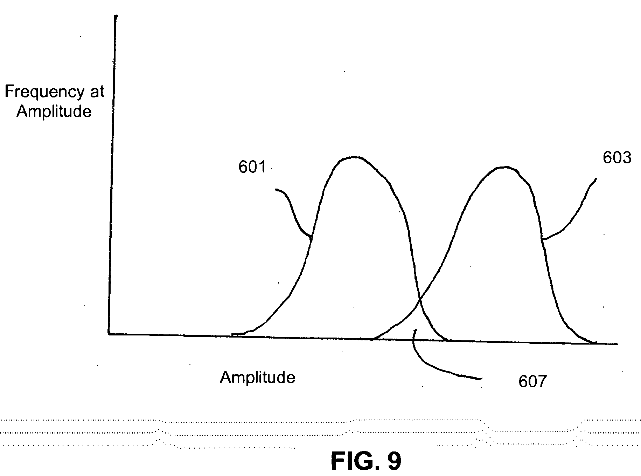

With reference to FIGS. 3, 5, 7 and 9, under this embodiment the steps of analyzing data to establish bearing condition 203, taking necessary actions based on the bearing condition 205, and determining an interval until the next automated inspection is to be run 207 use the data that was gathered in the step of gathering data 201. Likewise, the steps of analyzing a subset of the set of components 225, and signaling a bearing failure 227 use the data that was gathered and processed in the steps of gathering data 221 and decomposing data 223. Furthermore, the steps of calculating indicia of off-axis rotor motion levels 243, storing the indicia of off-axis rotor motion 245, using the information to calculate a probability of failure 247, signaling a failure condition 249 use the data that was gathered in the step of gathering data 241.

Using the database, the acceleration spectrum components sensitivity (i.e., the change in peak response from the state at the previous inspection time to the state at the current inspection time) is determined 401, thus providing an indication of the degradation of the bearings for every set of similar operating conditions over the last of the predetermined millage Interval. With at least three data points (i.e., inspection times), one can then better estimate future degradation of the bearings for any given set of similar operating conditions.

The acceleration spectrum components are now passed though a narrow band-pass filter 403 that target a band of frequencies known as critical in bearing failure for this given turbocharger. These frequencies are experimentally established, and represent a subset of the set of components calculated in the FFT analysis. As a result, a critical subset of the set of components is identified, and that subset establishes the critical acceleration spectrum components of the measured response.

The current bearing health state is thereby determined 405 as a current health-state distribution 601. More particularly, for the range of operating conditions a plurality of amplitude levels are identified, and the frequency with which the peak responses reached the different amplitude levels (throughout the range of operating conditions) is calculated. As was described, this current health-state distribution is based on sampling for the predetermined time period over which data was gathered.

Based on previous experimental data, a predetermined failure-condition distribution is established for the operating conditions. The distribution represents anticipated degradation response levels, filtered to represent only the frequencies known as critical in bearing failure, for the failure condition. As the bearings degrade, the current health-state distribution will increasingly approach the failure-condition distribution, and thus will have an increasing overlap area 607.

The area of the overlap area 607 can be calculated by any of a number of methods known by persons skilled in the art. For example, the two distributions can be approximated by functions, and the overlap area of the functions can then be calculated, or the frequency for each given amplitude level can be compared, with the overlap of each added together.

Along with the failure-condition distribution, two threshold levels for the overlap are also previously determined. The first is an approach-threshold level, which establishes a maximum level of overlap, below which the bearing is established as healthy. The second is a failure-threshold level, which establishes a minimum level of overlap, above which the bearing is established as in a failure condition. The failure-condition distribution 603 and threshold levels are retrieved from memory 407. These first and second thresholds each establish a failure condition for the analysis, the latter being a final failure condition.

Between the approach-threshold level and the failure-threshold level is a range of overlap levels in which the bearings are considered to be increasingly close to the failure-condition distribution, i.e., they are approaching a final failure state. Optionally, additional threshold levels could exist between the approach-threshold level and the failure-threshold level. For such an embodiment, the approach-threshold level, the failure-threshold level, and all the intermediate levels would each be failure conditions within the scope of the claims.

The current health-state distribution is now compared 409 to the failure-condition distribution. More particularly, the size of the overlapping area 607 between the current health-state distribution 601 and the failure-condition distribution 603 is calculated. This comparison provides an analysis 225 of a function of a subset of the set of measured components for first passage past a threshold. In this embodiment, three possible outcomes may be had in this comparison.

The first possible outcome of the comparison of the current health-state distribution to the failure-condition distribution is that the overlap is below the approach-threshold level. If that is the case then the bearings are considered healthy, and the testing is complete. In that case, the interval until the next inspection is typically set 413 to be the same as the previous interval i.e., the interval between the just-completed testing and the previous testing, or the interval until the next inspection is set as the next interval in a previously established interval schedule (which could vary, for example, with milage). The inspection process is repeated once that interval until the next inspection has passed.

The second possible outcome of the comparison of the current health-state distribution to the failure-condition distribution is that the overlap is at or above the approach-threshold level, but below the failure-threshold level. In that case, the bearings might be at risk of approaching failure, and hypothesis testing 425, 427 is used to analyze the data to provide greater confidence that the analysis outcome is good.

A hypothesis test is a known-in-the-art method of making a statistical decision using experimental data, and therefore will not be discussed here in full detail. Under the hypothesis test, the current alpha and beta risks are calculated. The alpha risk is the risk of receiving a false positive, i.e., it is the risk that the bearings are being judged as bad when they are still good. The beta risk is the risk of receiving a false negative, i.e., it is the risk that the bearings are being judged as good when they are already bad. A pair of maximum-risk levels are previously determined as the maximum allowable levels of alpha and beta risk. For example, the maximum alpha might be .05, and the maximum beta might be .10 (i.e., one-tenth).

If the calculated alpha and beta risks are at or below the maximum allowable levels, then the hypothesis test shows good results, otherwise it fails to show good results. If it fails to show good results, then the bearings are still considered to be healthy, and the testing is complete. In that case, the interval until the next inspection is typically set 413 to be either the same as the previous interval, or the next interval in a previously established interval schedule. The inspection process is repeated once that interval until the next inspection has passed.

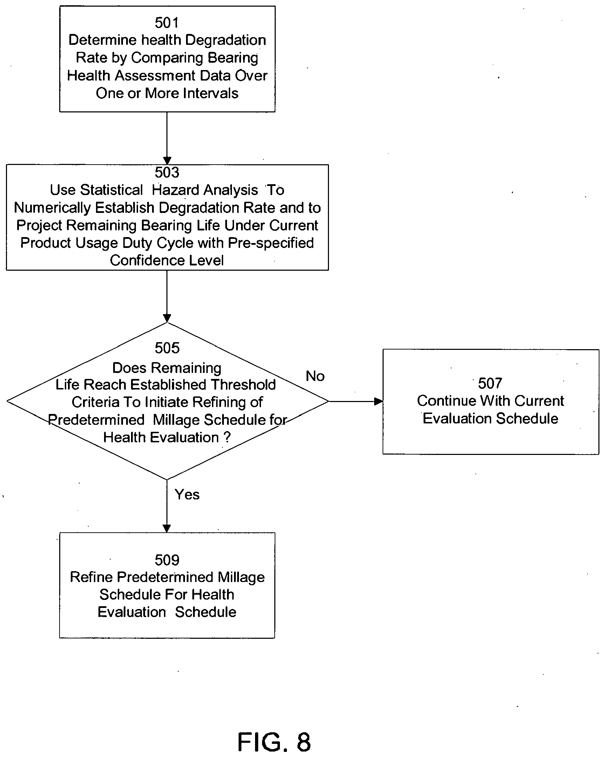

If the hypothesis test shows good results, then the bearings are considered to be approaching failure, and the testing is complete. In that case, actions deemed to be necessary are taken based the bearing condition 205, such as signaling a bearing failure condition via warning lights or other means 227, 249 and other acts, e.g., the engine operating conditions are derated 429 such that the engine and turbocharger are not allowed to operate at peak load levels. The inspection schedule is then analyzed, as is described below with respect to FIG. 8.

Finally, the third possible outcome of the comparison of the current health-state distribution to the failure-condition distribution is that the approach-threshold level and the failure-threshold level are exceeded by the amount of overlap. In that case, the bearings are in a final failure state and at risk of catastrophic failure, and as in the second possible outcome, hypothesis testing 417, 419 (as described above) is used to analyze the data to provide greater confidence that the analysis outcome is good.

If the calculated alpha and beta risks are at or below the maximum allowable levels, then the hypothesis test shows good results, otherwise it fails to show good results. If the hypothesis test shows good results, then the bearings are considered to be in a final failure state, and the testing is complete. In that case, actions deemed to be necessary are taken based the bearing condition 205, 227, 249, such as signaling a bearing failure condition via warning lights or other means, and other acts, e.g., the engine is switched to a limp home mode with a warning to replace the turbocharger 421, and/or the engine is shut down completely to prevent catastrophic turbocharger failure with possible related system damage.

If, however, the hypotheses test fails to show good results, then the bearings are only considered to be approaching failure, and the testing is complete. In that case, actions deemed to be necessary are taken based the bearing condition 205, 227, 249, such as signaling a bearing failure condition via warning lights or other means, and other acts, e.g., the engine operating conditions are de-rated 429 such that the engine and turbocharger are not allowed to operate at peak load levels. The inspection schedule is then analyzed, as is described below with respect to FIG. 8.

With reference to FIG. 8, along with the actions deemed necessary in light of the bearing condition, e.g., the signaling of a bearing failure condition, the inspection schedule is analyzed for possible refinement. More particularly, along with taking the necessary actions, a health degradation rate is determined by comparing present data (e.g., overlap levels) to data from one or more prior inspection times 501. Statistical hazard analysis, a method known in the art is used to numerically establish a degradation rate and to project the remaining bearing life under current product usage duty cycle, with a pre-specified confidence level 503.

Criteria for refining the present inspection schedule, based on the calculated remaining bearing life and the present inspection schedule are pre-specified. For example, the criteria could be that if the interval to the next scheduled inspection is over 50% of the projected remaining bearing life, then the schedule is to be refined.

The interval to the next scheduled inspection and the projected remaining bearing life are analyzed under the pre-specified criteria 505. If the
interval to the next scheduled inspection does not violate the criteria, then the next interval is assigned according to the present inspection schedule 507. If, on the other hand, the interval to the next scheduled inspection violates the criteria, then the inspection schedule is refined to have finer increments such that the next increment does not violate the criteria, and next interval is
assigned according to the new inspection schedule 509. The inspection process is repeated once that interval until the next inspection has passed.

For each aspect of the invention described above, the invention is further comprised of computer readable media having computer-executable instructions for performing the method of that aspect, a processing device
operative to read the computer readable media and execute the computer- executable instructions, a turbocharger including the processing device, and an engine including such a turbocharger. Also, systems using hardware devices configured with processing characteristics equivalent to some or all of the above-described software when used on appropriate computer hardware
are considered within the scope of the invention (e.g., using a chip configured to conduct FFT analysis).

## Claims

1. A method for timing a bearing failure-condition action for a turbocharger (101) that includes a sensor (161, 163) configured for sensing information on off-axis rotor motion, comprising the steps of:
a) receiving a stream of information from the sensor over a sensing period, the information being indicative of off-axis rotor motion during a plurality of identified operating conditions;
b) reducing the stream of information to frequency-at-amplitude data representing, for each of a plurality of amplitude levels, the frequency of occurrence with which the off-axis rotor motion reached each amplitude level;
c) calculating a degree of overlap between the frequency-at-amplitude data and previously established frequency-at-amplitude data representing the same plurality of operating conditions during a failure condition; and
d) initiating a failure-condition action if the calculated overlap surpasses a threshold level from among a set of one or more threshold levels.

2. The method of claim 1, and further comprising:
e) if the calculated overlap does not surpass a final failure condition threshold level, then repeating steps (a) through (e).

3. Computer readable media having computer-executable instructions for performing the method of claim 1 using a computer processing device configured to receive information, process that information, and to initiate a failure-condition action.

4. An apparatus comprising:
computer readable media having computer-executable instructions for performing the method of claim 1;
a computer processing device, being configured to receive information, process that information, and to initiate a failure-condition action, and being operative to read the computer readable media and execute the computer-executable instructions.

## Patentansprüche

1. Verfahren zur zeitlichen Steuerung einer Lagerfehlerzustandsaktion für einen Turbolader (101), der einen Sensor (161, 163) umfasst, der zum Abtasten von Information über eine achsenferne Rotorbewegung konfiguriert ist, das die folgenden Schritte aufweist:
a) Empfangen eines Stroms von Informationen vom Sensor während einer Abtastungszeitspanne, wobei die Informationen eine achsenferne Rotorbewegung während einer Vielzahl von erkannten Betriebszuständen anzeigen;
b) Reduzieren des Stroms von Informationen auf Amplitudenhäufigkeitsdaten, die für jede einer Vielzahl von Amplitudenhöhen die Ereignishäufigkeit repräsentieren, mit der die achsenferne Rotorbewegung jede Amplitudenhöhe erreichte;
c) Berechnen eines Ausmaßes einer Überlappung zwischen den Amplitudenhäufigkeitsdaten und vorher aufgestellten Amplitudenhäufigkeitsdaten, die dieselbe Vielzahl von Betriebszuständen während eines Fehlerzustands repräsentieren; und
d) Einleiten einer Fehlerzustandsaktion, wenn die berechnete Überlappung einen Schwellenwertpegel aus einer Gruppe von einem oder mehreren Schwellenwertpegeln überschreitet.

2. Verfahren nach Anspruch 1, das ferner aufweist:
e) wenn die berechnete Überlappung einen endgültigen Fehlerzustands-Schwellenwertpegel nicht überschreitet, Wiederholen der Schritte (a) bis (e).

3. Computerlesbares Medium, das computerausführbare Anweisungen zum Durchführen des Verfahrens nach Anspruch 1 aufweist, das eine Computerverarbeitungsvorrichtung verwendet, die konfiguriert ist, Informationen zu empfangen, diese Informationen zu verarbeiten und eine Fehlerzustandsaktion einzuleiten.

4. Vorrichtung, die Folgendes aufweist:
ein computerlesbares Medium, das computerausführbare Anweisungen zum Durchführen des Verfahrens nach Anspruch 1 aufweist;
eine Computerverarbeitungsvorrichtung, die konfiguriert ist, Informationen zu empfangen, diese Informationen zu verarbeiten und eine Fehlerzustandsaktion einzuleiten, und betriebsfähig ist, das computerlesbare Medium zu lesen und die computerausführbaren Anweisungen auszuführen.

## Revendications

1. Procédé de synchronisation d'une action de condition de panne de palier pour un turbocompresseur (101) qui comprend un capteur (161, 163) configuré pour détecter des informations sur un mouvement du rotor en dehors de l'axe, comprenant les étapes suivantes :
a) recevoir un flux d'informations provenant du capteur au cours d'une période de détection, les informations étant indicatives d'un mouvement du rotor en dehors de l'axe pendant une pluralité de conditions de fonctionnement identifiées ;
b) réduire le flux d'informations en données de fréquence par rapport à l'amplitude représentant, pour chacun d'une pluralité de niveaux d'amplitude, la fréquence de l'occurrence avec laquelle le mouvement du rotor en dehors de l'axe a atteint chaque niveau d'amplitude ;
c) calculer un degré de chevauchement entre les données de fréquence par rapport à l'amplitude et des données de fréquence par rapport à l'amplitude précédemment établies représentant la même pluralité de conditions de fonctionnement au cours d'une condition de panne ; et
d) initier une action de condition de panne si le chevauchement calculé dépasse un niveau seuil parmi un ensemble d'un ou plusieurs niveaux seuil.

2. Procédé selon la revendication 1, et comprenant en outre l'étape suivante :
e) si le chevauchement calculé ne dépasse pas un niveau seuil de condition de panne finale, alors répéter les étapes (a) à (e).

3. Supports lisibles par ordinateur comportant des instructions exécutables par ordinateur pour mettre en oeuvre le procédé de la revendication 1 au moyen d'un dispositif de traitement informatique configuré pour recevoir des informations, pour traiter ces informations et pour initier une action de condition de panne.

4. Appareil comprenant :
des supports lisibles par ordinateur comportant des instructions exécutables par ordinateur pour mettre en oeuvre le procédé de la revendication 1 ;
un dispositif de traitement informatique, étant configuré pour recevoir des informations, traiter ces informations et pour initier une action de condition de panne, et étant opérationnel pour lire les supports lisibles par ordinateur et pour exécuter les instructions exécutables par ordinateur.
